# EUROPEAN PATENT APPLICATION

(11) **EP 4 400 273 A1**
(43) Date of publication of application: **17.07.2024**
(21) Application number: 23220543.5
(22) Date of filing: 28.12.2023
(51) Int. Cl.: B25J 9/16, B05C 5/02, B25J 11/00, B05B 12/12, B05B 13/04, B05C 11/10

(54) **METHOD AND APPARATUS FOR DISPENSING VISCOUS FLUID, AND METHOD FOR ASSEMBLING BATTERY MODULE**

(30) Priority: 13.01.2023 KR 20230005658
(71) Applicant: SK On Co., Ltd., Seoul 03161 (KR)
(72) Inventor: KIM, Jae Hun, 34124 Daejeon (KR); OH, Yoon Sung, 34124 Daejeon (KR); LEE, Min Young, 34124 Daejeon (KR); LEE, Seul Gi, 34124 Daejeon (KR); LEE, Seung Won, 34124 Daejeon (KR); HONG, Min Jeong, 34124 Daejeon (KR)
(74) Representative: Prüfer & Partner mbB Patentanwälte · Rechtsanwälte

(57) **Abstract**

An apparatus for dispensing a viscous fluid includes a dispenser module including a nozzle which dispenses a viscous fluid according to a profile; a robot module configured to move the nozzle according to the profile; a vision module configured to generate an image by photographing a workpiece to which the viscous fluid is dispensed; and a control module configured to integrally control the dispenser module and the robot module based on the image received from the vision module to dispense the viscous fluid according to the profile, wherein, in order to generate the profile, the control module provides a user with an interface which enables the user to input a pattern of the viscous fluid in such a way as to draw the pattern on the image. A user may freely generate a pattern of a viscous fluid, and may accurately dispense the viscous fluid according to the generated pattern.

## Description

### TECHNICAL FIELD

Embodiments of the present disclosure relate to a method and apparatus for dispensing a viscous fluid, and a method for assembling a battery module.

### BACKGROUND

A secondary battery is a battery which can charge and discharge electrical energy. The secondary battery may be used in the form of a battery module or a battery pack in which a plurality of battery cells are packed inside a case. While there are various ways to fix the case and the battery cells of the battery module, the case and the battery cells may be fixed using an adhesive material. The adhesive material may be applied using a mechanical device. Only when the adhesive material is applied at a correct position and in a correct shape, the battery cells and the case may be stably coupled.

### SUMMARY

Embodiments of the present disclosure provide a method and apparatus for dispensing a viscous fluid, which provides an interface capable of allowing a user to freely modify a pattern of a viscous fluid, and a method for assembling a battery module using the same.

According to the present disclosure, an apparatus for dispensing a viscous fluid may include: a dispenser module including a nozzle which dispenses a viscous fluid according to a profile; a robot module configured to move the nozzle according to the profile; a vision module configured to generate an image by photographing a workpiece to which the viscous fluid is dispensed; and a control module configured to integrally control the dispenser module and the robot module based on the image received from the vision module to dispense the viscous fluid according to the profile, wherein, in order to generate the profile, the control module provides a user with an interface which enables the user to input a pattern of the viscous fluid in such a way as to draw the pattern on the image.

According to an embodiment of the present disclosure, the interface may include: a picture window configured to display the image received from the vision module, and display the pattern drawn by the user; a motion window configured to display and input a path through which the robot module moves the nozzle along the pattern; and a parameter window configured to display and input parameters for adjusting an amount of the viscous fluid based on the pattern, wherein the control module generates the profile including the pattern inputted through the interface and the parameters.

According to an embodiment of the present disclosure, the pattern may include a straight line which is formed between a start point and an end point inputted by the user, or a curve whose shape is determined depending on positions and the number of middle points and a curvature inputted by the user in the middle of the pattern.

According to an embodiment of the present disclosure, the parameters may be set for each unit pattern which is defined by a start point and an end point, and may include at least one of a line speed of the robot module, a motor acceleration, a flux by which the viscous fluid is dispensed, a pressure, valve on coordinates and valve off coordinates.

According to an embodiment of the present disclosure, the control module may receive, before generating the profile, a reference from the user based on the image received from the vision module, may determine, when dispensing the viscous fluid according to the profile, whether the workpiece included in the image received from the vision module meets the reference, may perform dispensing when the workpiece is within the reference, and may output an alarm when the workpiece is out of the reference.

According to an embodiment of the present disclosure, the dispenser module may include: a first pump configured to inject a first constituent into a mixer; a second pump configured to inject a second constituent into the mixer; a first pressure sensor configured to measure a pressure of the first constituent inputted to the mixer; a second pressure sensor configured to measure a pressure of the second constituent inputted to the mixer; a third pressure sensor configured to measure a pressure of the viscous fluid supplied to the nozzle from the mixer; and a valve configured to turn on or off output of the viscous fluid from the nozzle, wherein, based on the pressures received from the first pressure sensor, the second pressure sensor and the third pressure sensor, the control module controls the valve so that a pressure of the viscous fluid outputted from the nozzle is the same as a pressure included in the profile.

According to the present disclosure, a method for dispensing a viscous fluid may include: receiving, by the control module, an image generated by a vision module photographing a workpiece; a setup operation in which a reference is received from a user for the workpiece appearing on the image and a profile is generated by receiving a pattern of a viscous fluid drawn on the image by the user; and an execution operation in which whether the workpiece included in the image meets the reference is determined and a dispenser module and a robot module are integrally controlled to dispense the viscous fluid according to the profile.

According to an embodiment of the present disclosure, the setup operation may include: a reference setting operation in which the reference inputted by the user to the image received from the vision module is received and stored; a pattern setting operation in which the pattern of the viscous fluid is received from the user and is stored using a picture window for displaying the image received from the vision module and displaying the pattern drawn by the user and a motion window for displaying and inputting a path through which the robot module moves a nozzle along the pattern; and a parameter setting operation in which parameters of the pattern are received from the user and are stored using a parameter window for displaying and inputting the parameters for adjusting an amount of the viscous fluid based on the pattern inputted in the pattern setting operation.

According to an embodiment of the present disclosure, the execution operation may include: a reference checking operation in which whether the workpiece included in the image received from the vision module meets the reference is determined when dispensing the viscous fluid according to the profile; a dispensing operation in which, when the workpiece included in the image is within the reference, the viscous fluid is dispensed to the workpiece by controlling the dispenser module and the robot module according to the profile; and an alarm operation in which, when the workpiece included in the image is out of the reference, an alarm is outputted.

According to an embodiment of the present disclosure, the dispensing operation may include: a pressure reception operation in which the control module receives pressures measured by the first pressure sensor, the second pressure sensor and the third pressure sensor; and a valve control operation in which the control module controls the valve so that a pressure of the viscous fluid outputted from the nozzle is the same as a pressure included in the profile.

According to an embodiment of the present disclosure, a method for assembling a battery module may include: a first operation in which a viscous fluid is dispensed to a portion of a housing or a portion of a battery cell of a battery module by the method for dispensing a viscous fluid the method including receiving, by the control module, an image generated by a vision module photographing a workpiece; performing a setup operation in which a reference is received from a user for the workpiece appearing on the image and a profile is generated by receiving a pattern of a viscous fluid drawn on the image by the user; and performing an execution operation in which whether the workpiece included in the image meets the reference is determined and a dispenser module and a robot module are integrally controlled to dispense the viscous fluid according to the profile; and a second operation in which the battery module is assembled using the portion of the housing or the portion of the battery cell dispensed with the viscous fluid.

According to an embodiment of the preset disclosure, in the first operation, according to a profile generated by receiving a pattern of the viscous fluid drawn by a user on an image obtained by photographing the portion of the housing or the portion of the battery cell, the viscous fluid may be dispensed.

Features and advantages of the embodiments of the present disclosure will be more apparent from the following detailed description taken in conjunction with the accompanying drawings.

Furthermore, the terms or words used in the specification and the claims of the present disclosure should not be construed as being typical or dictionary meanings, but should be construed as meanings and concepts conforming to the technical of the present disclosure on the basis of the principle that an inventor can properly define the concepts of the terms in order to describe his or her invention in the best way.

According to the embodiments of the present disclosure, a user may freely generate a pattern of a viscous fluid, and may accurately dispense the viscous fluid according to the generated pattern.

These and other features and advantages of the invention will become apparent from the detailed description of embodiments of the present disclosure and the following figures.

### BRIEF DESCRIPTION OF THE DRAWINGS

FIG. 1 is a view illustrating a battery module which is manufactured as battery cells and a housing which are coupled by a viscous fluid dispensed in accordance with an embodiment of the present disclosure.
FIG. 2 is a view illustrating a battery cell of FIG. 1.
FIG. 3 is a cross-sectional view taken along the line A-A' of FIG. 2.
FIG. 4 is a view illustrating coupling of the viscous fluid dispensed in accordance with the embodiment of the present disclosure, the battery cells and the housing.
FIG. 5 is a view illustrating that an apparatus for dispensing a viscous fluid in accordance with an embodiment of the present disclosure dispenses a viscous fluid to a workpiece.
FIG. 6 is a diagram showing the apparatus for dispensing a viscous fluid in accordance with the embodiment of the present disclosure.
FIG. 7 is a diagram showing a control module in accordance with an embodiment of the present disclosure.
FIG. 8 is a flowchart showing a method for dispensing a viscous fluid in accordance with an embodiment of the present invention.
FIG. 9 is an image generated as a vision module in accordance with an embodiment of the present disclosure by photographing a workpiece.
FIG. 10 is a diagram showing an interface which is provided to a user by the control module in accordance with the embodiment of the present disclosure.
FIG. 11 is a diagram showing a dispenser module in accordance with an embodiment of the present disclosure.
FIG. 12 is a view illustrating a pattern in which parameters are differently set in accordance with an embodiment of the present disclosure.
FIG. 13 is a diagram showing a curve pattern in which middle points are inserted in accordance with an embodiment of the present disclosure.

### DETAILED DESCRIPTION

The objectives, advantages, and features of the embodiments of the present disclosure will be more apparent from the following detailed description of embodiments taken in conjunction with the accompanying drawings, but the present disclosure is not limited thereto. In describing the embodiments, when it is determined that the detailed description of the related art may obscure the gist of the present disclosure, the detailed description will be omitted.

In the following description, the same components will be designated by the same reference numerals although the components are shown in different drawings, and similar components will be designated by similar reference numerals.

The terminology used to describe an embodiment of the present disclosure is not intended to limit the present disclosure. Singular expressions include plural expressions unless the context clearly dictates otherwise.

Drawings may be schematic or exaggerated to illustrate implementations.

In the present disclosure, expressions such as "have," "may have," "include," or "may include" indicate the presence of corresponding features (e.g., numerical values, functions, operations, or components such as parts), but do not exclude the presence of additional features.

The terms such as "one", "other", "another", "first" and "second" are used to differentiate a certain component from other components, but components are not limited by the terms.

Terms indicating directions such as up, down, left, right, X-axis, Y-axis, Z-axis, etc. are only for the sake of convenience in description, and it should be understood that the terms may be expressed differently depending on the position of an observer or the position of an object.

Embodiments described in the present disclosure and the accompanying drawings are not intended to limit the present disclosure to specific embodiments. Furthermore, it should be understood that the present disclosure includes various modifications, and/or alternatives of embodiments.

Hereinafter, an embodiment of the present disclosure will be described in detail with reference to the accompanying drawings.

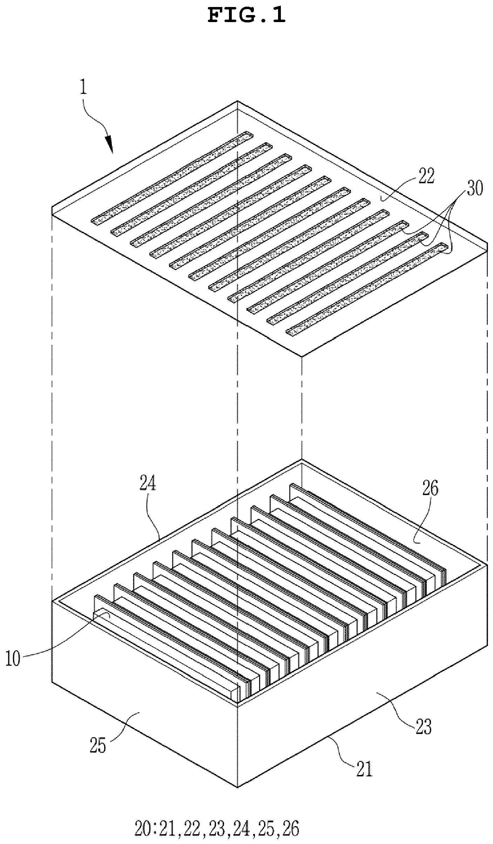

FIG. 1 is a view illustrating a battery module 1 as it gets manufactured in accordance with an embodiment of the present disclosure. The battery module 1 comprises a plurality of battery cells 10 inside a housing 20. The battery cells 10 are coupled to the housing using a viscous fluid 30.

The battery module 1 may be manufactured as a structure in which the plurality of battery cells 10 are received in the housing 20. The housing 20 and the battery cells 10 may be coupled by the viscous fluid 30 such as an adhesive. The viscous fluid 30 may include a two-component adhesive in which a resin and a hardener are mixed. The viscous fluid 30 may include a thermal adhesive which is made of a material with high thermal conductivity. The viscous fluid 30 may be hardened between the battery cells 10 and the housing 20 to fix the battery cells 10 and the housing 20. The housing 20 may include a top cover 22, a bottom cover 21, a first side cover 23, a second side cover 24, a front cover 25 and a rear cover 26. The covers may be connected to or integrally formed with each other to form the housing 20. FIG. 1 illustrates a structure in which the plurality of battery cells 10 are received in a reception space formed as the bottom cover 21, the first side cover 23, the second side cover 24, the front cover 25 and the rear cover 26 are coupled and the top cover 22 dispensed with the viscous fluid 30 is coupled to the other covers so that the viscous fluid 30 is brought into contact with the battery cells 10.

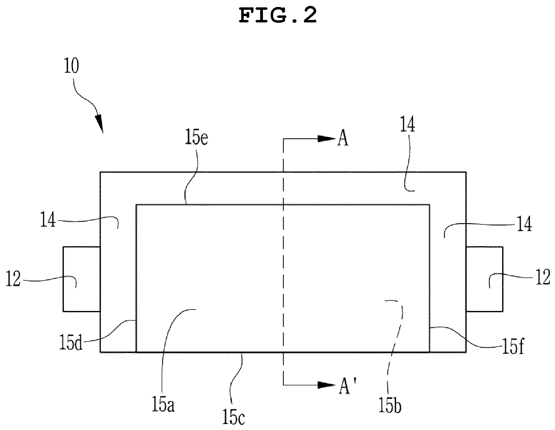

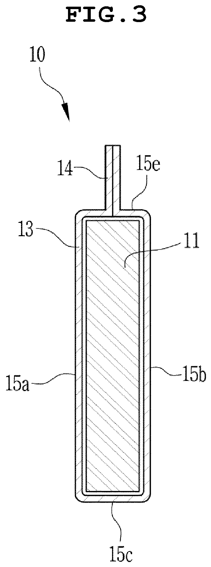

FIG. 2 is a view illustrating the battery cell 10 of FIG. 1. FIG. 3 is a cross-sectional view taken along the line A-A' of FIG. 2. Reference is now made to FIGS. 2 and 3 together.

The battery cell 10 may be formed such that an exterior material 13 surrounds an electrode assembly 11 with protruding electrode tabs 12. The electrode assembly 11 may include a positive electrode material, a negative electrode material and an isolation layer, disposed between the positive and negative electrodes. The electrode tabs 12 may be connected to the positive electrode material and the negative electrode material, respectively. The exterior material 13 may be a film which is formed by coating the top and bottom of an aluminum layer with an electrically insulating material.

The battery cell 10 may be formed as a pouch in which the electrode assembly 11 is enclosed within the exterior material 13. The exterior material 13 is formed into a pouch as it encloses the electrode assembly 11 to have sealing parts 14 on three surfaces thereof and no sealing part on one surface thereof. The sealing part 14 is formed by coupling opposing portions of the exterior material 13 by heat or by a physical or chemical method. For example, in the battery cell 10 of FIG. 2, a first surface 15a and a second surface 15b may become a receiving part by forming the exterior material 13 with a third surface 15c which may have no sealing part 14 since the third surface 15c serves as a part where the exterior material 13 is folded, a fourth surface 15d, a fifth surface 15e and a sixth surface 15f which may have the sealing parts 14. The electrode tabs 12 may protrude out of the fourth surface 15d and the sixth surface 15f.

Besides the structure of the battery cell 10 illustrated in FIGS. 2 and 3, even when manufacturing the battery module 1 including a battery cell of a structure in which two electrode tabs 12 protrude out of one surface or a battery cell of a structure in which sealing parts are formed on four surfaces by using two sheets of an exterior material, an apparatus 100 for dispensing a viscous fluid in accordance with an embodiment of the present disclosure may be used.

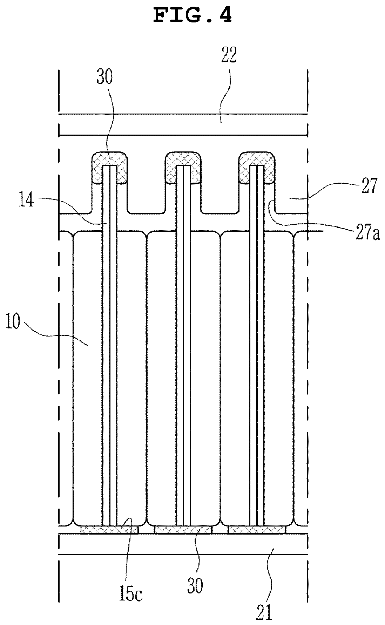

FIG. 4 is a view illustrating coupling of the viscous fluid 30 dispensed in accordance with the embodiment of the present disclosure, the battery cells 10 and the housing 20. Reference is now made to FIG. 1 together.

The plurality of battery cells 10 may be received between the bottom cover 21 and the top cover 22. The viscous fluid 30 may be dispensed between the bottom cover 21 and the third surfaces 15c of the battery cells 10. An insulation sheet 27 may be coupled to the top cover 22. The insulation sheet 27 may include recesses 27a. The viscous fluid 30 may be dispensed in the recesses 27a of the insulation sheet 27, and the sealing parts 14 of the battery cells 10 may be inserted into the viscous fluid 30 dispensed into the recesses 27a of the insulation sheet 27. When the viscous fluid 30 hardens, the battery cells 10 may be fixed to the bottom cover 21 and the top cover 22.

More specifically, the viscous fluid 30 may be placed in a plurality of parallel rows 30 in the recesses 27a of the insulation sheet 27, with the positioning of each row of the viscous fluid corresponding to a side of a corresponding one of the battery cells 10 so that when the top cover 22 is coupled to the rest of the covers 23, 24, 25 and 26 to form the housing of the battery module 1 each battery cell 10 is coupled to the insulation sheet 27 that is attached to the top cover 22 with a row of the viscous fluid being disposed between the insulation sheet 27 and the battery cell 10. Each row of the viscous fluid 30 comes into direct contact with both the insulation sheet 27 and a corresponding one of the battery cells 10. The dimensions of each of the recesses 27a may be slightly larger than the dimensions of the side of the battery cells 10, as illustrated in the embodiment of FIGS. 1 to 4.

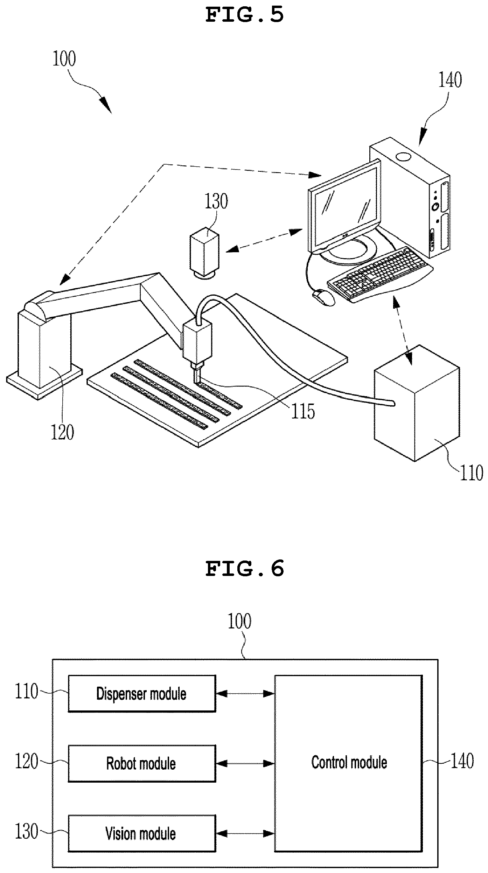

In addition to the covers 21 to 26, the housing 20 may further include the insulation sheet 27 or a heat exchange sheet (not illustrated), a heat dissipation sheet (not illustrated), and various other components. In addition, the battery module 1 may further include various components in addition to the battery cells 10 and the housing 20. Apparatus 100 illustrated in FIG. 5 may be used for dispensing a viscous fluid in accordance with an embodiment of the present disclosure. The apparatus 100 may dispense the viscous fluid 30 to the various components of the battery module 1 and the housing 20.

As illustrated in FIG. 1, the viscous fluid 30 may be dispensed to the bottom cover 21 or the insulation sheet 27 of the top cover 22, and the bottom cover 21 or the top cover 22 may be moved and coupled with other covers so that the viscous fluid 30 is brought into contact with the battery cells 10. Alternatively, the viscous fluid 30 may be dispensed to the bottom cover 21 or the insulation sheet 27 of the top cover 22, and the battery cells 10 may be moved to be received in the housing 20 so that the battery cells 10 are brought into contact with the viscous fluid 30. Alternatively, the viscous fluid 30 may be first directly dispensed to the battery cells 10, and then the bottom cover 21 or the top cover 22 may be coupled.

For example, the viscous fluid 30 may be first directly dispensed to the battery cells 10, then the battery cells 10 may be positioned on the bottom cover 21 stacked next to each other with their sides having the viscous fluid in direct contact with the bottom cover 21, and then top cover 22 with the insulation sheet 27 may be coupled to the other covers 25, 26, 23, and 24 with the sealing parts 14 of the battery cells 10 inserted into the recesses 27a of the insulation sheet 27. As such, the method for coupling the viscous fluid 30, the battery cells 10 and the housing 20 may be varied without limiting the scope of the invention provided it employs the described technical concepts of the present disclosure. A pattern or an amount in or by which the viscous fluid 30 is dispensed between the battery cells 10 and the housing 20 may exert an influence on the cooling performance or electrical insulation performance of the battery module 1. Since the apparatus 100 for dispensing a viscous fluid in accordance with the embodiment may generate a pattern of the viscous fluid 30 in a free shape and precisely dispense the viscous fluid 30, the apparatus 100 may be used in studying the performance of a pattern of the viscous fluid 30.

FIG. 5 is a view illustrating the apparatus 100 dispensing a viscous fluid 30 to a workpiece in accordance with an embodiment of the present disclosure. FIG. 6 is a diagram showing the main components of the apparatus 100 for dispensing a viscous fluid in accordance with the embodiment of the present disclosure.

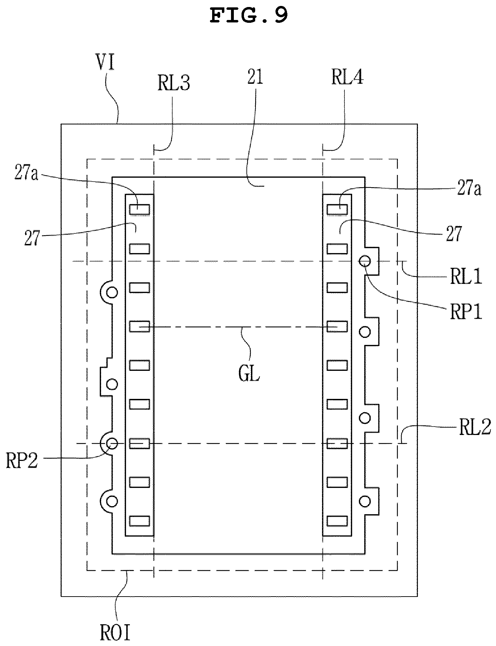

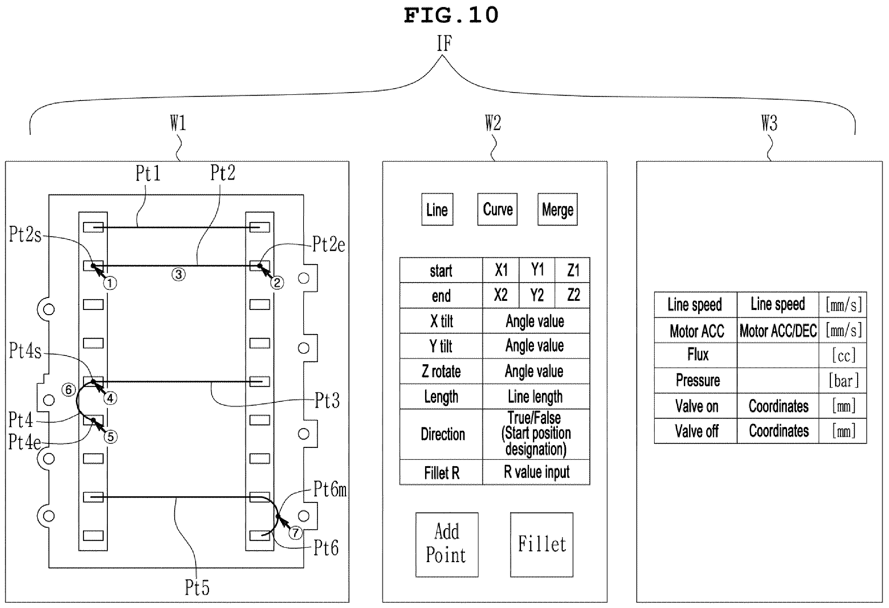

The apparatus 100 for dispensing a viscous fluid in accordance with the embodiment illustrated in FIGS. 5 and 6, include a dispenser module 110 which includes a nozzle 115 for dispensing the viscous fluid 30 according to a profile, a robot module 120 which moves the nozzle 115 according to the profile, a vision module 130 which generates an image VI by photographing a workpiece to which the viscous fluid 30 is dispensed, and a control module 140 which integrally controls the dispenser module 110 and the robot module 120 based on the image VI received from the vision module 130 to dispense the viscous fluid 30 according to the profile. In order to generate the profile, the control module 140 may provide a user with an interface IF which enables the user to input a pattern of the viscous fluid 30 in such a way as to draw the pattern on the image VI. See FIGS. 9 and 10.

The profile may include the pattern of the viscous fluid 30 and parameters. The profile may include a plurality of patterns, and may include parameters set for each pattern. The profile may include the relative position of the pattern with respect to a reference point or a reference line. The profile may be stored in the control module 140. The profile may be generated as the user inputs the pattern to the control module 140 in such a way as to draw the pattern.

The vision module 130 may generate the image VI by photographing the workpiece and provide the image VI to the control module 140. The vision module 130 may include a camera. The vision module 130 may photograph the workpiece which is placed in a work space. The image VI generated by the vision module 130 may include the workpiece. The workpiece is a target to which the viscous fluid 30 is to be dispensed. The workpiece may include the housing 20, the bottom cover 21, the top cover 22, the battery cells 10, the insulation sheet 27, and other obj ects. The workpiece may be placed in the work space by a transport device such as a conveyor belt or a robot arm.

The dispenser module 110 may dispense the viscous fluid 30 according to the profile.

The robot module 120 may move the nozzle 115 of the dispenser module 110 with respect to the workpiece according to the profile. The robot module 120 may include a robot arm which may be driven in six axis directions. The robot module 120 may include a device which moves the nozzle 115 along X, Y and Z axes. Based on the image VI generated by the vision module 130, the control module 140 may integrally control the dispenser module 110 and the robot module 120 to dispense the viscous fluid 30 to the workpiece according to the profile.

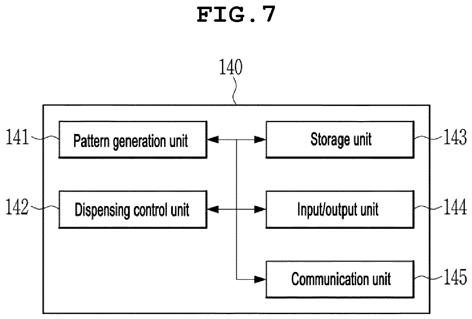

FIG. 7 is a diagram showing the control module 140 in accordance with an embodiment of the present disclosure.

The control module 140 may include a pattern generation unit 141 which provides the user with the interface IF for enabling the user to set the profile by inputting the pattern of the viscous fluid 30 in such a way as to draw the pattern and inputting parameters, and a dispensing control unit 142 which integrally controls the dispenser module 110 and the robot module 120 to dispense the viscous fluid 30 according to the profile. The control module 140 may further include a storage unit 143 which stores the profile, a reference and a program code, an input/output unit 144 which includes a display for providing the user with the interface IF and an input device, and a communication unit 145 which is connected to a wired or wireless network to transmit and receive data. The control module 140 may be implemented by a computer device. The control module 140 may be implemented by a device capable of processing information, such as a PC, a tablet PC, a PLC (programmable logic controller), and a remote control device.

The pattern generation unit 141 may include one or more processors. The pattern generation unit 141 may be implemented in such a way as to read the program code from the storage unit 143 and execute the program code. The program code may be written to provide the user with the interface IF and store the reference, the pattern of the viscous fluid 30 and the parameters inputted through the interface IF by the user. Before generating the profile, the pattern generation unit 141 may receive the reference from the user based on the image VI received from the vision module 130. The pattern generation unit 141 may provide the user with the interface IF through the input/output unit 144. Detailed content in which the user draws the pattern of the viscous fluid 30 and inputs the parameters using the interface IF will be described later.

The dispensing control unit 142 may include one or more processors and one or more signal generation circuits. When dispensing the viscous fluid 30 according to the profile, the dispensing control unit 142 may determine whether the workpiece included in the image VI received from the vision module 130 meets the reference. The dispensing control unit 142 may perform dispensing when the workpiece is within the reference, and may output an alarm when the workpiece is out of the reference. The dispensing control unit 142 may control the robot module 120 to move according to the profile, and may control the dispenser module 110 to dispense the viscous fluid 30 at a predetermined pressure and amount according to the profile. The dispensing control unit 142 may be fed back with pressures of respective parts of the dispenser module 110, and may perform feedback control so that the viscous fluid 30 is dispensed according to the profile. Detailed content regarding the feedback control of the dispensing control unit 142 will be described later.

The storage unit 143 may store the program code which is written to perform respective operations of a dispensing method of the viscous fluid 30, and may store other necessary data. The storage unit 143 may store the profile and the reference generated by the pattern generation unit 141. The storage unit 143 may store the image VI generated by the vision module 130. The storage unit 143 may store a design software file such as a CAD.

The input/output unit 144 may include a display device such as a touch screen, a display and a monitor and an input device such as a keyboard, a mouse, a touch pad and a touch pencil. The input/output unit 144 may provide the user with the interface IF, and may receive the reference, the pattern and the parameters inputted through the interface IF by the user.

The communication unit 145 may be connected to a remote control system which integrally controls processes, including the apparatus 100 for dispensing the viscous fluid 30, through a wired or wireless network. The communication unit 145 may be connected to the user's terminal through a wired or wireless network, and the user may use the interface IF or be provided with an alarm.

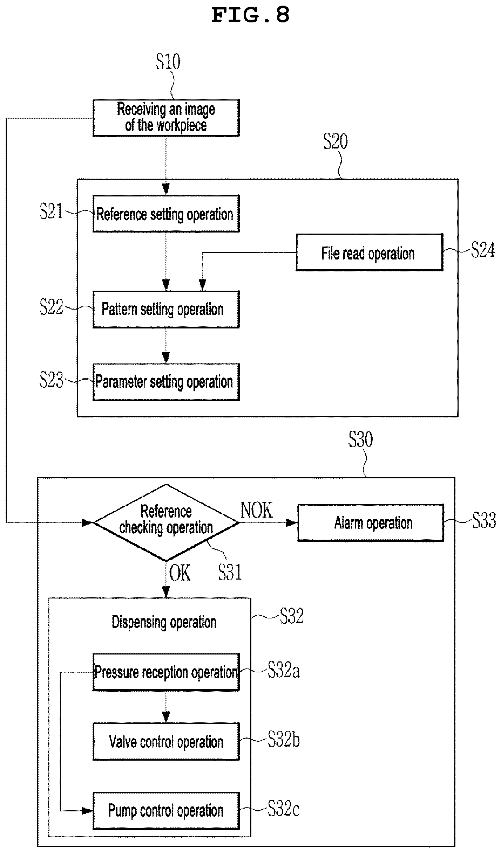

FIG. 8 is a flowchart showing a method for dispensing a viscous fluid in accordance with an embodiment of the present disclosure.

The dispensing method of the viscous fluid 30 include receiving S10, by the control module 140, the image VI generated by the vision module 130 photographing the workpiece, a setup operation S20 in which the reference is received from the user for the workpiece appearing on the image VI and the profile is generated by receiving the pattern of the viscous fluid 30 drawn on the image VI by the user, and an execution operation S30 in which whether the workpiece included in the image VI meets the reference is determined and the dispenser module 110 and the robot module 120 are integrally controlled to dispense the viscous fluid 30 according to the profile.

The receiving S10, by the control module 140, the image VI may be performed when the workpiece is placed in the work space. The receiving S10, by the control module 140, the image VI may be performed before performing the setup operation S20. The receiving S10, by the control module 140, the image VI may be performed before performing the execution operation S30. In the receiving S10, by the control module 140, the image VI, the vision module 130 may generate the image VI by photographing the workpiece, and may provide the image VI to the control module 140. The control module 140 may receive the image VI from the vision module 130.

During the setup operation S20 the user enters the profile of the viscous fluid 30 to be dispensed to the workpiece. The setup operation S20 may include a reference setting operation S21 in which the reference inputted by the user to the image VI received from the vision module 130 is received and stored, a pattern setting operation S22 in which the pattern of the viscous fluid 30 is received from the user and is stored using a picture window W1 for displaying the image VI received from the vision module 130 and displaying the pattern drawn by the user and a motion window W2 for displaying and inputting a path through which the robot module 120 moves the nozzle 115 along the pattern, and a parameter setting operation S23 in which the parameters of the pattern are received from the user and are stored using a parameter window W3 for displaying and inputting the parameters for adjusting the amount of the viscous fluid 30 based on the pattern inputted in the pattern setting operation S22. The setup operation S20 may be performed by the pattern generation unit 141.

The reference setting operation S21 is a process in which the user sets the reference for the workpiece included in the image VI. The reference may include a reference point, a reference line, a region of interest ROI, a limit slope, etc. In the reference setting operation S21, the pattern generation unit 141 may provide the user with the image VI and receive and store a reference point inputted by the user.

FIG. 9 is the image VI generated as the vision module 130 in accordance with an embodiment of the present disclosure by photographing the workpiece.

As shown in FIG. 9, the user may input the reference to the image VI received from the vision module 130. For example, the user may input a reference point at any position of the workpiece appearing on the image VI. For example, the bottom cover 21 may include a plurality of screw holes at edges, and the user may input any one screw hole as a reference point. One or more reference points may be inputted. In FIG. 9, a first reference point RP1 may be a first screw hole on the right side of the bottom cover 21, and a second reference point RP2 may be inputted as a third screw hole on the left side of the bottom cover 21. A reference point inputted by the user may be stored by being converted into coordinates (x, y) on the image VI.

The user may input a reference line on the basis of a portion of the workpiece. The user may input a reference line in a horizontal or vertical direction of the bottom cover 21 at the first reference point RP 1. A first reference line RL1 may be inputted in the horizontal direction of the bottom cover 21 at the first reference point RP1. A second reference line RL2 may be inputted in the horizontal direction of the bottom cover 21 at the second reference point RP2. A third reference line RL3 and a fourth reference line RL4 may be inputted in the vertical direction of the bottom cover 21 along the boundaries of insulation sheets 27 coupled to the bottom cover 21. The first reference line RL1 and the second reference line RL2 may be perpendicular to the third reference line RL3 and the fourth reference line RL4.

The user may input a limit slope which is a limit value of the angle formed by a reference line and the boundary of the image VI. For example, when the angle between a reference line and the boundary of the image VI is large, it is meant that the workpiece is obliquely placed in the work space. If the workpiece is obliquely placed, accurate dispensing according to the profile may be difficult. Thus, the limit slope may be set. For example, the limit slope may be set such that the angle between the first reference line RL1 and the boundary of the image VI is 10°.

The user may input the region of interest ROI to the image VI in consideration of the operation radius of the robot module 120. The region of interest ROI may be set as a quadrangle. When the workpiece is placed outside the region of interest ROI, dispensing of the viscous fluid may be difficult. The lines of the region of interest ROI may be set to be parallel to the boundaries of the image VI.

The user may set a guideline GL to be automatically displayed. In FIG. 9, the guideline GL may be a line which connects the centers of opposing recesses 27a of the insulation sheets 27. The guideline GL may be displayed in the pattern setting operation S22. The user may draw the pattern of the viscous fluid 30 using the guideline GL.

When the user inputs the reference to the image VI and stores the reference, the pattern generation unit 141 may store the inputted reference in the storage unit 143. After storing the reference, the pattern generation unit 141 may perform the pattern setting operation S22.

Reference is now made back to FIG. 8. In the pattern setting operation S22, the control module 140 may receive the pattern and parameters of the viscous fluid 30 from the user using the interface IF.

FIG. 10 is a diagram showing the interface IF which is provided to the user by the control module 140 in accordance with the embodiment of the present disclosure.

In the pattern setting operation S22, the pattern generation unit 141 may provide the user with the interface IF through the input/output unit 144. The interface IF may include the picture window W1 which displays the image VI received from the vision module 130 and displays the pattern drawn by the user, the motion window W2 which displays and inputs a path through which the robot module 120 moves the nozzle 115 along the pattern, and the parameter window W3 which displays and inputs the parameters for adjusting the amount of the viscous fluid 30 based on the pattern. The control module 140 may generate the profile including the pattern inputted through the interface IF and the parameters.

The picture window W1 is a region which displays the image VI generated by the vision module 130. The picture window W1 is a region where the user draws the pattern of the viscous fluid 30. The user may input the pattern of the viscous fluid 30 in such a way as to draw the pattern on the image VI displayed on the picture window W1. As the user draws and inputs a first pattern Pt1 on the picture window W1, the inputted first pattern Pt1 may be displayed as it is on the image VI.

The motion window W2 is a region which displays a path through which the robot module 120 moves the nozzle 115, to form the pattern drawn on the picture window W1 by the user. The pattern may include a straight line which is formed between a start point and an end point inputted by the user or a curve whose shape is determined depending on the positions and the number of middle points and a curvature inputted by the user in the middle of the pattern. The motion window W2 may include buttons for selecting the type of a line to be drawn by the user.

For example, when the user selects a Line button, selects ① a start point Pt2s of a second pattern Pt2 and selects (2) an end point Pt2e of the second pattern Pt2 on the picture window W1, the second pattern Pt2 may be formed ③ as a line which connects the start point Pt2s and the end point Pt2e of the second pattern Pt2.

When the user selects a Curve button, selects (4) a start point Pt4s of a fourth pattern Pt4 and selects ⑤ an end point Pt4e of the fourth pattern Pt4 on the picture window W1, the fourth pattern Pt4 may be formed ⑥ as a curve which connects the start point Pt4s and the end point Pt4e of the fourth pattern Pt4. The start point Pt4s of the fourth pattern Pt4 may be a point the same as the start point or the end point of a third pattern Pt3.

When the user selects a Merge button and selects the third pattern Pt3 and the fourth pattern Pt4 on the picture window W1, the two patterns may be merged into one pattern.

When the user selects an Add Point button and selects (7) the middle of a sixth pattern Pt6 which is a curve connected to a fifth pattern Pt5, a middle point Pt6m of the sixth pattern Pt6 may be generated at the selected position. The user may generate a plurality of middle points in one pattern using the Add Point button. When the middle point is generated, a box which displays the coordinates of the middle point may be additionally generated between a box displaying the coordinates of a start point and a box displaying the coordinates of an end point in the motion window W2.

When the user selects the pattern, the motion window W2 may display the coordinates of a start point and the coordinates of an end point of the pattern. Coordinates may be expressed as values of X, Y and Z axes. The user may select the pattern and input X-tilt, Y-tilt and Z-rotate values. The X tilt is a degree to which the nozzle 115 is tilted in an X direction with respect to the surface of the work space where the workpiece is placed. The Y tilt is a degree to which the nozzle 115 is tilted in a Y direction with respect to the surface of the work space where the workpiece is placed. Z rotate is an angle at which the nozzle 115 rotates about the Z axis. Since a type in which the viscous fluid 30 is dispensed to the workpiece may differ depending on the distance between the end of the nozzle 115 and the workpiece, the curvature of the workpiece, the viscosity of the viscous fluid 30, the pressure at the end of the nozzle 115, etc., the user may finely adjust the pattern of the viscous fluid 30 in such a way as to input values to the motion window W2.

By selecting a Fillet button, the user may change a connecting portion of the pattern into a round shape. The user may select the Fillet button, select the pattern and input a desired curvature R. By selecting the Curve pattern and inputting a desired curvature, the user may conveniently and smoothly draw a curve. By modifying the positions and the number of middle points and a curvature inputted in the middle of the pattern, the user may form a curve of a free shape.

The parameter window W3 may allow input of values of factors that exert an influence on the amount of the viscous fluid 30. The parameters may be set for each unit pattern which is defined by a start point and an end point. The parameters may include at least one of the line speed of the robot module 120, a motor acceleration Motor ACC, a flux by which the viscous fluid 30 is dispensed, a pressure, valve on coordinates and valve off coordinates. The line speed, the motor acceleration, the flux and the pressure are values that are kept while the viscous fluid 30 is dispensed.

The line speed is a speed at which the robot module 120 moves the nozzle 115 along the pattern. The line speed may be inputted by the user. The motor acceleration is a degree to which the nozzle 115 accelerates while moving along the pattern. The motor acceleration may be inputted by the user.

The flux is the capacity of the viscous fluid 30 outputted by the dispenser module 110. The pressure is a pressure at which the viscous fluid 30 is outputted from the end of the nozzle 115. The flux and the pressure may be inputted by the user.

The Valve On may input coordinates at which the viscous fluid 30 is started to be outputted from the end of the nozzle 115. The Valve Off may input coordinates at which the output of the viscous fluid 30 is stopped at the end of the nozzle 115. The start point and the end point of the pattern may be selected and inputted as the coordinates of the Valve On and the Valve Off,.

The user may input the pattern and the parameters of the viscous fluid 30 using the picture window W1, the motion window W2 and the parameter window W3. The user may input a plurality of patterns on the picture window W1, select each pattern and input parameters. The user may repeat a process of inputting a pattern on the picture window W1, modifying the values of the motion window W2 and inputting the values of the parameter window W3.

When the user inputs and stores the pattern of the viscous fluid 30 through the interface IF, the pattern generation unit 141 may store inputted data as the profile in the storage unit 143.

The user may also perform a file read operation S24 before the pattern setting operation S22. The file read operation S24 is a process in which a CAD file, etc. stored in the storage unit 143 are read. When the file read operation S24 is performed, the pattern setting operation S22 and the parameter setting operation S23 may be performed. When the file read operation S24 is performed, the profile stored in the CAD file may be read and displayed on the picture window W1, the motion window W2 and the parameter window W3. In the case where only the shape of the pattern is stored in the CAD file, the user may modify the specific movement path of the nozzle 115 and the specific operation of the dispenser module 110 using the motion window W2 and the parameter window W3. By performing the file read operation S24, the user may select the pattern displayed on the picture window W1, and may modify the values appearing on the motion window W2 and the parameter window W3. Through the file read operation S24, the user may load the pattern of the viscous fluid 30 stored in the CAD file, and may modify the pattern and store the modified pattern using the interface IF.

Reference is now made back to FIG. 8.

When the setup operation S20 is completed, the profile is stored in the storage unit 143. The execution operation S30 of actually dispensing the viscous fluid 30 to the workpiece according to the profile stored in the storage unit 143 may be performed . The execution operation S30 may include a reference checking operation S31 in which whether the workpiece included in the image VI received from the vision module 130 meets the reference is determined when dispensing the viscous fluid 30 according to the profile, a dispensing operation S32 in which, when the workpiece included in the image VI is within the reference, the viscous fluid 30 is dispensed to the workpiece by controlling the dispenser module 110 and the robot module 120 according to the profile, and an alarm operation S33 in which, when the workpiece included in the image VI is out of the reference, an alarm is outputted. The execution operation S30 may be performed by the dispensing control unit 142.

When the workpiece is placed in the work space, the receiving S10, by the control module 140, the image VI is performed, and the control module 140 may receive the image VI obtained by photographing the workpiece. In order to dispense the viscous fluid 30 to a plurality of workpieces, the receiving S10, by the control module 140, the image VI and the execution operation S30 may be repeatedly performed.

The reference checking operation S31 is a process in which a reference point is recognized in the image VI received from the vision module 130, a set reference line is checked, a limit slope is checked and whether the workpiece is placed within the region of interest ROI is determined.

Reference is now made to FIG. 9. In the reference checking operation S31, according to the reference stored in the storage unit 143, the dispensing control unit 142 may recognize the right first screw hole serving as a reference point in the bottom cover 21 being the workpiece and acquire the coordinates of the right first screw hole, and may recognize the left third screw hole and acquire the coordinates of the left third screw hole. The dispensing control unit 142 may acquire the first reference line RL1, the second reference line RL2, the third reference line RL3 and the fourth reference line RL4. The dispensing control unit 142 may calculate the angle between the first reference line RL1 and the boundary of the image VI, and may compare the angle with the limit slope stored in the storage unit 143. The dispensing control unit 142 may determine whether the edge of the workpiece deviates out of the boundary of the region of interest ROI. When the workpiece is placed within the reference in the reference checking operation S31, the dispensing operation S32 may be performed. When it is determined in the reference checking operation S31 that the workpiece deviates from at least one of the references, the alarm operation S33 may be performed.

Reference is now made back to FIG. 8. The alarm operation S33 informs the user that the position of the workpiece is abnormal. When the alarm operation S33 is performed, the dispensing operation S32 may not be performed. The user may control the apparatus 100 for dispensing a viscous fluid to modify the position of the workpiece and perform the receiving S10, by the control module 140, the image VI and the execution operation S30 again. After performing the alarm operation S33, the dispensing control unit 142 may control a transport device to discharge the corresponding workpiece and move another workpiece into the work space.

The dispensing operation S32 is a process in which the viscous fluid 30 is dispensed to the workpiece according to the profile by controlling the dispenser module 110 and the robot module 120. The dispensing control unit 142 may dispense the viscous fluid 30 at a predetermined flux and pressure as set in the parameters, while moving the nozzle 115 according to the pattern of the profile. Since the dispensing control unit 142 integrally controls the robot module 120 and the dispenser module 110, the viscous fluid 30 may be dispensed with uniform quality compared to when individually controlling each of the robot module 120 and the dispenser module 110. According to the position of the reference point recognized in the reference checking operation S31, the dispensing control unit 142 may perform dispensing by moving the coordinates set in the profile. There may be a slight variation in position in a process in which the workpiece is placed in the work space, but, since the dispensing control unit 142 performs dispensing by moving the coordinates of the profile according to the position of the reference point, the viscous fluid 30 may be dispensed at an accurate position.

In the dispensing operation S32, the dispensing control unit 142 may perform feedback control based on pressure.

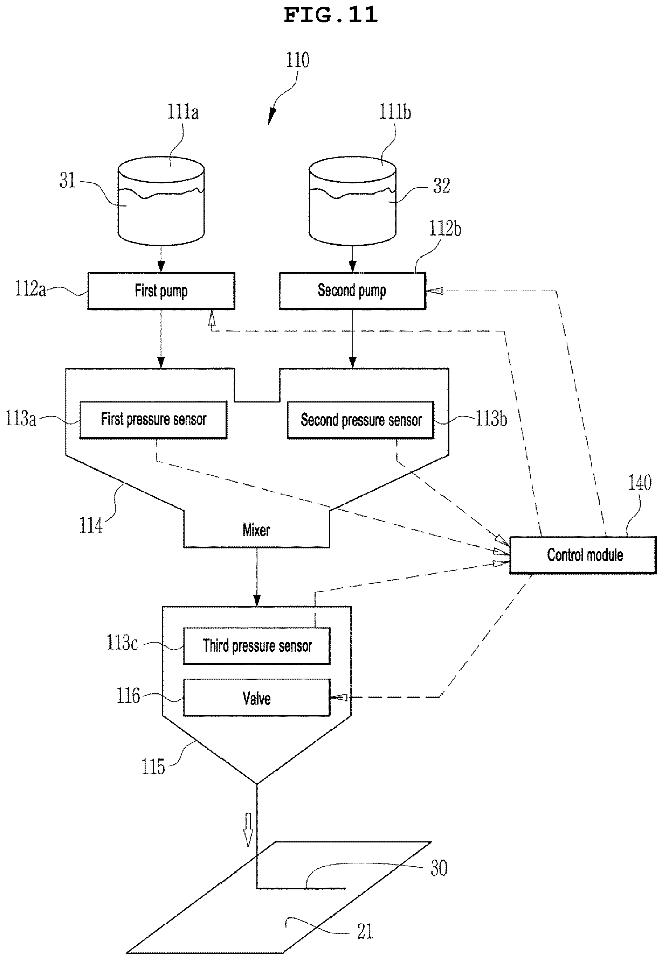

FIG. 11 is a diagram showing the dispenser module 110 in accordance with an embodiment of the present disclosure.

The dispenser module 110 may include a first tank 111a which stores a first constituent 31, a second tank 111b which stores a second constituent 32, a first pump 112a which injects the first constituent 31 into a mixer 114, a second pump 112b which injects the second constituent 32 into the mixer 114, a first pressure sensor 113a which measures the pressure of the first constituent 31 inputted to the mixer 114, a second pressure sensor 113b which measures the pressure of the second constituent 32 inputted to the mixer 114, a third pressure sensor 113c which measures the pressure of the viscous fluid 30 supplied to the nozzle 115 from the mixer 114, and a valve 116 which turns on or off the output of the viscous fluid 30 from the nozzle 115.

The first constituent 31 stored in the first tank 111a may be a resin. The second constituent 32 stored in the second tank 111b may be a hardener. The first pump 112a and the second pump 112b may be metering pumps capable of pumping accurate amounts. The first pump 112a may supply a predetermined amount of the first constituent 31 to the mixer 114. The second pump 112b may supply a predetermined amount of the second constituent 32 to the mixer 114. The first pressure sensor 113a may be disposed in a region where the first constituent 31 is supplied in the mixer 114. The first pressure sensor 113a may measure a pressure at which the first pump 112a injects the first constituent 31 into the mixer 114, and may provide the measured pressure to the control module 140. The second pressure sensor 113b may be disposed in a region where the second constituent 32 is supplied in the mixer 114. The second pressure sensor 113b may measure a pressure at which the second pump 112b injects the second constituent 32 into the mixer 114, and may provide the measured pressure to the control module 140. The mixer 114 may generate the viscous fluid 30 by mixing the first constituent 31 and the second constituent 32, and may output the viscous fluid 30 to the nozzle 115. The nozzle 115 may include the third pressure sensor 113c which measures the pressure of the viscous fluid 30 supplied from the mixer 114. The third pressure sensor 113c may measure the pressure of the nozzle 115 and provide the measured pressure to the control module 140. In an on state, the valve 116 may open the nozzle 115 to output the viscous fluid 30. In an off state, the valve 116 may close the nozzle 115 to prevent the viscous fluid 30 from being outputted.

Based on the pressures received from the first pressure sensor 113a, the second pressure sensor 113b and the third pressure sensor 113c, the control module 140 may control the valve 116 so that the pressure of the viscous fluid 30 outputted from the nozzle 115 is the same as the pressure included in the profile.

The dispensing operation S32 may include a pressure reception operation S32a in which the control module 140 receives the pressures measured by the first pressure sensor 113a, the second pressure sensor 113b and the third pressure sensor 113c, and a valve control operation S32b in which the control module 140 controls the valve 116 so that the pressure of the viscous fluid 30 outputted from the nozzle 115 is the same as the pressure included in the profile. The dispensing operation S32 may include a pump control operation S32c in which the control module 140 controls the first pump 112a and the second pump 112b so that the pressure of the viscous fluid 30 outputted from the nozzle 115 is the same as the pressure included in the profile. The feedback control performed by the dispensing control unit 142 may be achieved through the pressure reception operation S32a, the valve control operation S32b and the pump control operation S32c.

The pressure reception operation S32a may be repeatedly performed in real time in the dispensing process. In the pressure reception operation S32a, the control module 140 may receive in real time the pressure measured by the first pressure sensor 113a, the pressure measured by the second pressure sensor 113b and the pressure measured by the third pressure sensor 113c.

In the valve control operation S32b, the dispensing control unit 142 controls the valve 116 to be turned on or off so that the pressure measured by the third pressure sensor 113c of the nozzle 115 reaches the pressure set in the profile.

Depending on the shapes and sizes of the dispenser module 110 and the robot module 120, the distance between the mixer 114 and the nozzle 115 may be different, the distance between a pump and the mixer 114 may be different, and the shape of a pipe which connects the pump, the mixer 114 and the nozzle 115 and through which the viscous fluid 30 flows may be changed in real time according to the movement of the robot module 120. Therefore, even when the first pump 112a and the second pump 112b supply the first constituent 31 and the second constituent 32 at the set pressure, a pressure may vary in the nozzle 115 which is positioned at a long distance from the pump. Since there is a time difference when a pressure is transferred, depending on the viscosity of the viscous fluid 30, the pressure outputted from the nozzle 115 may be different from the profile.

In the dispenser module 110 in accordance with the embodiment, the valve 116 is connected to the nozzle 115. When the pressure of the third pressure sensor 113c is lower than the pressure of the profile, the dispensing control unit 142 turns off the valve 116, and when the pressure of the nozzle 115 sufficiently increases, the dispensing control unit 142 turns on the valve 116 so that the output of the viscous fluid 30 is started. Conversely, when the pressure of the third pressure sensor 113c is higher than the pressure of the profile, by moving the nozzle 115 to the outside of the work space and then maximally opening the valve 116, the pressure of the nozzle 115 may be reduced. When the pressure of the nozzle 115 becomes lower than the pressure of the profile, by turning off the valve 116 again, placing the nozzle 115 on the workpiece and turning on the value 116 when the pressure of the profile is reached, the viscous fluid 30 may be dispensed.

The pump control operation S32c is a process in which, when the pressure of the third pressure sensor 113c is different from the pressure of the profile, the pressures of the first pump 112a and the second pump 112b are controlled to be changed. The dispensing control unit 142 may change the pressures of the first pump 112a and the second pump 112b according to the pressure set in the profile. Compared to the case of performing only the pump control operation S32c, by keeping the pressure of a pump constant and performing the valve control operation S32b, the pressure of the nozzle 115 may be more easily and accurately matched to the profile.

The viscous fluid 30 dispensed in the dispensing operation S32 may form a pattern on the workpiece (e.g., the bottom cover 21).

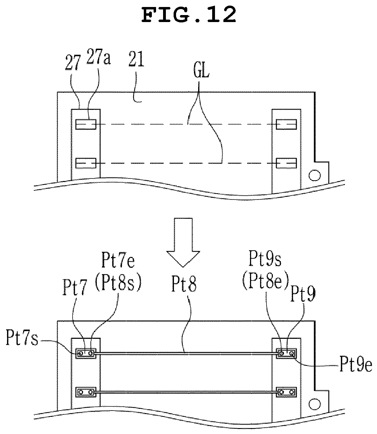

FIG. 12 is a view illustrating a pattern in which parameters are differently set in accordance with an embodiment of the present disclosure.

The pattern generation unit 141 may modify the pattern drawn by the user using the guideline GL in the pattern setting operation S22. When the user selects a start point, an end point or a middle point near the guideline GL, the start point, the end point, or the middle point may be moved to a point on the guideline GL. This is because it may be difficult for the user to select the exact center of the recess 27a. The pattern generation unit 141 may improve the accuracy of the pattern drawn by the user by using the guideline GL inputted in the reference setting operation S21. For example, for the workpiece in which the insulation sheets 27 are coupled to the bottom cover 21, a guideline GL which connects the centers of recesses 27a of the insulation sheets 27 may be displayed on the picture window W1. When the user selects a start point at a position slightly off the center of the recess 27a, the pattern generation unit 141 may move the selected start point to a point on the guideline GL.

The pattern generation unit 141 may set parameters differently for each pattern while performing the parameter setting operation S23. For example, in the case where it is desirable to dispense a large amount of the viscous fluid 30 into the recesses 27a of the insulation sheets 27, the user may draw a seventh pattern Pt7 in a recess 27a of a left insulation sheet 27, may draw an eighth pattern Pt8 between a left recess 27a and a right recess 27a, and may draw a ninth pattern Pt9 in a recess 27a of a right insulation sheet 27. The user may select the seventh pattern Pt7 and the ninth pattern Pt9 and input a flux as a large value in the parameter window W3, and may select the eighth pattern Pt8 and input a flux as a small value in the parameter window W3. In this way, by modifying the values of the parameter window W3, as illustrated in FIG. 12, the seventh pattern Pt7 between a start point Pt7s and an end point Pt7e of the seventh pattern Pt7 may be displayed on the picture window W1 as a thick line, the eighth pattern Pt8 between a start point Pt8s and an end point Pt8e of the eighth pattern Pt8 may be displayed on the picture window W1 as a thin line, and the ninth pattern Pt9 between a start point Pt9s and an end point Pt9e of the ninth pattern Pt9 may be displayed on the picture window W1 as a thick line.

The parameter window W3 may be set to display different patterns on the picture window W1 in different colors. The pattern generation unit 141 may distinguish patterns with different parameters on the basis of fluxes or pressures and may display the patterns on the picture window W1 in different colors. In addition, the user may select a pattern and select a color to be displayed on the picture window W1, in the parameter window W3. When the user selects a color of the pattern, the user may conveniently distinguish between a plurality of patterns, making it easy to compare patterns with various parameters.

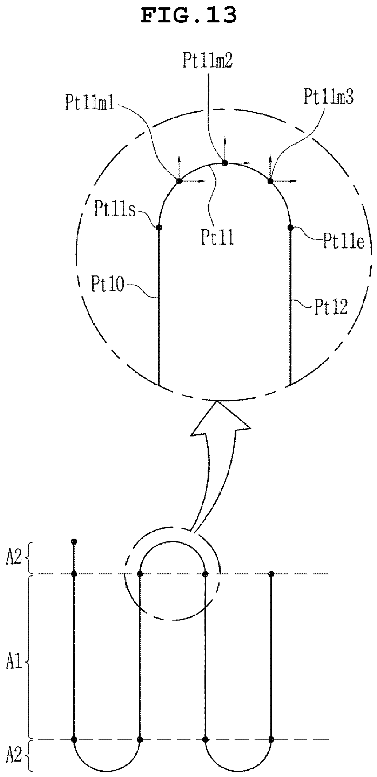

FIG. 13 is a diagram showing a curve pattern in which middle points Pt1m are inserted in accordance with an embodiment of the present disclosure.

In order to dispense a plurality of straight patterns at once, a curve pattern which connects the straight patterns may be formed. An area A1 is a straight pattern area, and an area A2 is a curve pattern area. Parameters of the area A1 and the area A2 may be set differently. Because the area A2 requires dispensing a curve, a speed at which the robot module 120 moves the nozzle 115 may be set to be slow. The curvature of an appropriate curve pattern may be different depending on the viscosity of the viscous fluid 30, a line speed, etc. Alternatively, the curvature of a curve pattern may be various by the area of the area A2, etc.

In order to smoothly dispense a curve pattern, a plurality of middle points Pt11m may be inserted between patterns. For example, an eleventh pattern Pt11 as a curve pattern which connects a tenth pattern Pt10 and a twelfth pattern Pt12 may include three middle points Pt11m. By selecting the Curve button in the motion window W2 and selecting a start point Pt11s and an end point Pt11e of the eleventh pattern Pt11, the user may draw the eleventh pattern Pt11 as a curve. Then, as the user selects the Add Point button and selects the middle of the eleventh pattern Pt11, a first middle point Pt11m1 may be inserted into the eleventh pattern Pt11, and in the same way, a second middle point Pt11m2 and a third middle point Pt11m3 may also be inserted. By modifying the position of a middle point or a curvature R in the motion window W2, the user may generate a curve pattern of a desired shape.

The above-described method for dispensing a viscous fluid may be applied to a method for assembling a battery module.

A method for assembling a battery module in accordance with an embodiment may include a first operation in which the viscous fluid 30 is dispensed to a portion of the housing 20 or a portion of the battery cell 10 of the battery module 1 by the method for dispensing a viscous fluid in accordance with an embodiment of the present disclosure, and a second operation in which the battery module 1 is assembled using the portion of the housing 20 or the portion of the battery cell 10 dispensed with the viscous fluid 30. The portion of the housing 20 may include the bottom cover 21, the top cover 22, the first side cover 23, the second side cover 24, the front cover 25, the rear cover 26, and so on and may include at least one of components such as a busbar, an insulation sheet, an insulation plate, a heat sink, a cooling fluid path, and so on, and the viscous fluid 30 may be dispensed to these components.

The first operation is a process in which the viscous fluid 30 is dispensed to a component of the battery module 1 using the method for dispensing a viscous fluid in accordance with an embodiment of the present disclosure. The battery module 1 may include various components in addition to the housing 20 and the battery cells 10. The viscous fluid 30 may be not only a thermal adhesive but also various types of adhesives. Therefore, various types of viscous fluids 30 may be dispensed to components of the battery module 1 using the method for dispensing a viscous fluid in accordance with an embodiment of the present disclosure.

At this time, in the first operation, according to the profile generated by receiving the pattern of the viscous fluid 30 drawn by the user on an image obtained by photographing the portion of the housing 20 or the portion of the battery cell 10, the viscous fluid 30 may be dispensed. As described above in the method for dispensing a viscous fluid in accordance with an embodiment of the present disclosure, the user may generate the profile of the viscous fluid 30 by inputting a pattern by drawing and setting parameters, and according to the profile generated through this process, the first operation may be performed to dispense the viscous fluid 30.

By performing the first operation, the viscous fluid 30 is dispensed to the housing 20 or the battery cell 10 of the battery module 1 according to the profile, and by performing the second operation of assembling the battery module 1 using this, the viscous fluid 30 dispensed according to the profile is included in the battery module 1 as a final product. The shape of the viscous fluid 30 included in the battery module 1 assembled by the method for assembling a battery module in accordance with an embodiment of the present disclosure is formed according to the profile.

Since the method for dispensing a viscous fluid in accordance with an embodiment of the present disclosure is used in the process of assembling the battery module 1, the user may conveniently generate and apply a desired pattern of the viscous fluid 30, whereby productivity may be improved.

Although embodiments of the present disclosure have been described for illustrative purposes, it will be appreciated that the present disclosure is not limited thereto. Those skilled in the art will appreciate that various modifications, additions and substitutions are possible without departing from the scope of the present disclosure. Therefore, the scope of the present disclosure should not be limited to the above-described embodiments but should include the modifications thereof.

In the above-described embodiments, all operations may be selectively performed, or part of the operations may be omitted. In each embodiment, the operations are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

The embodiments of the present disclosure have been described in the drawings and specification. Although specific terminologies are used here, those are only to describe the embodiments of the present disclosure. Therefore, the present disclosure is not restricted to the above-described embodiments and many variations are possible within the scope of the present disclosure. It should be apparent to those skilled in the art that various modifications can be made on the basis of the technological scope of the present disclosure in addition to the embodiments disclosed herein.

Accordingly, any and all modifications, or variations should be considered to be within the scope of the present disclosure, and the detailed scope of the present disclosure will be defined by the accompanying claims. Furthermore, the embodiments may be combined to form additional embodiments.

## Claims

1. An apparatus for dispensing a viscous fluid, the apparatus comprising:
a dispenser module including a nozzle which dispenses a viscous fluid according to a profile;
a robot module configured to move the nozzle according to the profile;
a vision module configured to generate an image by photographing a workpiece to which the viscous fluid is dispensed; and
a control module configured to integrally control the dispenser module and the robot module based on the image received from the vision module to dispense the viscous fluid according to the profile,
wherein, to generate the profile, the control module provides a user with an interface which enables the user to input a pattern of the viscous fluid in such a way as to draw the pattern on the image.

2. The apparatus of claim 1, wherein the interface comprises:
a picture window configured to display the image received from the vision module, and display the pattern drawn by the user;
a motion window configured to display and input a path through which the robot module moves the nozzle along the pattern; and
a parameter window configured to display and input parameters for adjusting an amount of the viscous fluid based on the pattern,
wherein the control module generates the profile including the pattern inputted through the interface and the parameters.

3. The apparatus of claim 1 or 2, wherein the pattern includes a straight line which is formed between a start point and an end point inputted by the user, or a curve whose shape is determined depending on positions and the number of middle points and a curvature inputted by the user in the middle of the pattern.

4. The apparatus of claim 2 or 3, wherein the parameters are set for each pattern which is defined by a start point and an end point, and include at least one of a line speed of the robot module, a motor acceleration, a flux by which the viscous fluid is dispensed, a pressure, valve on coordinates and valve off coordinates.

5. The apparatus of any one of claims 1 to 4, wherein the control module receives, before generating the profile, a reference from the user based on the image received from the vision module, determines, when dispensing the viscous fluid according to the profile, whether the workpiece included in the image received from the vision module meets the reference, performs dispensing when the workpiece is within the reference, and outputs an alarm when the workpiece is out of the reference.

6. The apparatus of any one of claims 1 to 5, wherein the dispenser module comprises:
a first pump configured to inject a first constituent into a mixer;
a second pump configured to inject a second constituent into the mixer;
a first pressure sensor configured to measure a pressure of the first constituent inputted to the mixer;
a second pressure sensor configured to measure a pressure of the second constituent inputted to the mixer;
a third pressure sensor configured to measure a pressure of the viscous fluid supplied to the nozzle from the mixer; and
a valve configured to turn on or off output of the viscous fluid from the nozzle, wherein, based on the pressures received from the first pressure sensor, the second pressure sensor and the third pressure sensor, the control module controls the valve so that a pressure of the viscous fluid outputted from the nozzle is the same as a pressure included in the profile.

7. A method for dispensing a viscous fluid, the method comprising:
receiving, by the control module, an image generated by a vision module photographing a workpiece;
performing a setup operation in which a reference is received from a user for the workpiece appearing on the image and a profile is generated by receiving a pattern of a viscous fluid drawn on the image by the user; and
performing an execution operation in which whether the workpiece included in the image meets the reference is determined and a dispenser module and a robot module are integrally controlled to dispense the viscous fluid according to the profile.

8. The method of claim 7, wherein the setup operation comprises:
a reference setting operation in which the reference inputted by the user to the image received from the vision module is received and stored;
a pattern setting operation in which the pattern of the viscous fluid is received from the user and is stored using a picture window for displaying the image received from the vision module and displaying the pattern drawn by the user and a motion window for displaying and inputting a path through which the robot module moves a nozzle along the pattern; and
a parameter setting operation in which parameters of the pattern are received from the user and are stored using a parameter window for displaying and inputting the parameters for adjusting an amount of the viscous fluid based on the pattern inputted in the pattern setting operation.

9. The method of claim 7 or 8, wherein the pattern includes a straight line which is formed between a start point and an end point inputted by the user, or a curve whose shape is determined depending on positions and the number of middle points and a curvature inputted by the user in the middle of the pattern.

10. The method of claim 8 or 9, wherein the parameters are set for each pattern which is defined by a start point and an end point, and include at least one of a line speed of the robot module, a motor acceleration, a flux by which the viscous fluid is dispensed, a pressure, valve on coordinates and valve off coordinates.

11. The method of any one of claims 7 to 10, wherein the execution operation comprises:
a reference checking operation in which whether the workpiece included in the image received from the vision module meets the reference is determined when dispensing the viscous fluid according to the profile;
a dispensing operation in which, when the workpiece included in the image is within the reference, the viscous fluid is dispensed to the workpiece by controlling the dispenser module and the robot module according to the profile; and
an alarm operation in which, when the workpiece included in the image is out of the reference, an alarm is outputted.

12. The method of any one of claims 7 to 11, wherein the dispenser module comprises:
a first pump configured to inject a first constituent into a mixer;
a second pump configured to inject a second constituent into the mixer;
a first pressure sensor configured to measure a pressure of the first constituent inputted to the mixer;
a second pressure sensor configured to measure a pressure of the second constituent inputted to the mixer;
a third pressure sensor configured to measure a pressure of the viscous fluid supplied to the nozzle from the mixer; and
a valve configured to turn on or off output of the viscous fluid from the nozzle, and
wherein the dispensing operation comprises:
a pressure reception operation in which the control module receives pressures measured by the first pressure sensor, the second pressure sensor and the third pressure sensor; and
a valve control operation in which the control module controls the valve so that a pressure of the viscous fluid outputted from the nozzle is the same as a pressure included in the profile.

13. A method for assembling a battery module, the method comprising:
a first operation in which a viscous fluid is dispensed to a portion of a housing or a portion of a battery cell of a battery module by the method for dispensing a viscous fluid according to any of claim 7 to 12; and
a second operation in which the battery module is assembled using the portion of the housing or the portion of the battery cell dispensed with the viscous fluid.

14. The method of claim 13, wherein in the first operation, according to a profile generated by receiving a pattern of the viscous fluid drawn by a user on an image obtained by photographing the portion of the housing or the portion of the battery cell, the viscous fluid is dispensed.
